# EUROPÄISCHE PATENTSCHRIFT

(11) **EP 1 412 662 B1**
(45) Veröffentlichungstag und Bekanntmachung des Hinweises auf die Patenterteilung: **14.09.2005**
(21) Anmeldenummer: 02754927.8
(22) Anmeldetag: 23.07.2002
(51) Int. Cl.: F16H 63/34, F16H 63/20

(54) **SCHALTEINRICHTUNG FÜR EIN MEHRSTUFIGES SCHALTGETRIEBE**
SHIFTING DEVICE FOR A MULTI-STEP MANUAL TRANSMISSION
DISPOSITIF DE COMMUTATION POUR BOITE DE VITESSES CLASSIQUE A ETAGES MULTIPLES

(30) Priorität: 28.07.2001 DE 10137068
(43) Veröffentlichungstag der Anmeldung: 28.04.2004
(73) Patentinhaber: ZF FRIEDRICHSHAFEN Aktiengesellschaft, 88038 Friedrichshafen (DE)
(72) Erfinder: RONGE, Ludger, 88097 Eriskirch (DE)
(86) Internationale Anmeldenummer: PCT/EP2002/008179
(87) Internationale Veröffentlichungsnummer: WO 2003/012320

(56) Entgegenhaltungen:
- WO-A-01/31233
- DE-A- 19 843 584
- DE-U- 20 021 183

## Beschreibung

Die Erfindung betrifft eine Schalteinrichtung für ein mehrstufiges Schaltgetriebe nach dem Oberbegriff des Anspruchs 1.

In mehrstufigen Handschaltgetrieben für Fahrzeuge, die unter Zugkraftunterbrechung geschaltete werden, d.h. eine dass eine Eingangswelle des Getriebes während des Schaltvorganges durch eine Kupplung von einer Antriebsmaschine getrennt wird, kann man den jeweiligen Gang mit einer formschlüssigen Schaltkupplung einlegen, indem eine Schaltverzahnung einer Schiebemuffe in eine Kupplungsverzahnung eines Kupplungskörpers geschoben wird, der an einem zu kuppelnden Getriebeelement befestigt ist, beispielsweise an einem Zahnrad oder einem Getriebegehäuse. Dabei wird das Drehmoment im geschalteten Zustand von einem Getriebeelement über den Kupplungskörper, die Kuppelverzahnung, die Schaltverzahnung, die Schiebemuffe und die Muffenführung auf ein anderes Getriebeelement, beispielsweise ein Zahnrad oder eine Welle, übertragen oder am Getriebegehäuse abgestützt.
Der geschaltete Gang bestimmt das Übersetzungsverhältnis und damit das Drehzahlverhältnis zwischen der Eingangswelle und der Ausgangswelle des Getriebes. Die nicht gekuppelten Getriebeelemente, beispielsweise frei umlaufende, ständig im gegenseitigen Eingriff befindliche Zahnräder der übrigen Gänge, laufen mit einer ihrer Übersetzung entsprechenden Differenzdrehzahl zu den geschalteten Getriebeelementen. Wird von einem Gang zu einem anderen gewechselt, müssen die zu kuppelnden Teile während des Schaltens auf eine annähernd gleiche Drehzahl gebracht werden, bevor die Schaltverzahnungen der Schiebemuffe in die Kupplungsverzahnung des zu schaltenden Kupplungskörpers eingreifen kann. Hierzu dienen Synchronisierungen.
Die Gänge werden von Zahnradsätzen gebildet, die hintereinander angeordnet sind und zwischen denen sich Schaltkupplungen befinden. Diese werden durch eine Schalteinrichtung wechselweise entsprechend dem vorgewählten Gang betätigt.
Dabei ist darauf zu achten, dass nicht zwei Schaltkupplungen gleichzeitig betätigt werden, da hierdurch das Getriebe beschädigt werden kann, zumindest aber störende Geräusche auftreten und die Zugkraft ungewollt lange unterbrochen ist. Dies kann in Notfallsituationen gefährliche Folgen nach sich ziehen.

Aus der DE 198 43 584 A1 ist eine gattungsgemäße Schalteinrichtung bekannt, die hierin vollinhaltlich aufgenommen sein soll. Um sicherzustellen, dass stets nur eine Schaltkupplung betätigt wird und die übrigen Schaltkupplungen bei der Schaltung in ihrer Neutralstellung verriegelt sind, ist eine parallel zur Schaltwelle angeordnete Sperrwelle vorgesehen, die mit der Schaltwelle verdrehbar ist, aber axial fest im Gehäuse angeordnet ist. Für die Sperrwelle muss im Getriebegehäuse eine separate Aufhängung vorgesehen werden, ebenso ist Bewegungsraum und Bauraum für die Sperrwelle vorzusehen.

Die Schrift DE-U-20021183 offenbart die Merkmale des Oberbegriffs des unabhängigen Anspruchs 1.

Der Erfindung liegt die Aufgabe zugrunde, eine Schalteinrichtung eines mehrstufigen Schaltgetriebes zu schaffen, die bei einem geringen Platzbedarf eine sichere Verriegelung nicht geschalteter Schaltkupplungen gewährleistet.

Die Aufgabe wird gelöst durch eine Schalteinrichtung mit den Merkmalen des Anspruchs 1. Ausgestaltungen sind Gegenstand von Unteransprüchen.

Vorgeschlagen wird eine Schalteinrichtung eines mehrstufigen Schaltgetriebes, mit der mehrere axial hintereinander angeordnete Schaltkupplungen mit jeweils einer Schiebemuffe wechselweise über jeweils eine Schaltschwinge schaltbar sind. Dazu sind erste Formschlusselemente so auf einer schwenkbaren und axial im Getriebegehäuse verschiebbaren Wähl- und Schaltwelle angeordnet, dass bei vorgegebenen Schwenkwinkeln der Wähl- und Schaltwelle jeweils nur ein erstes Formschlusselement mit einem zweiten Formschlusselement zusammenwirkt, das an einer Schaltschwinge angeordnet ist. Dabei wird durch ein axiales Verschieben der Wähl- und Schaltwelle die zugehörige Schaltschwinge betätigt. Die übrigen Schaltschwingen sind während der Betätigung mittels einer Sperrvorrichtung in ihrer neutralen Position gesperrt, die eine Sperrhülse umfasst. Diese Sperrhülse ist auf der Wähl- und Schaltwelle für je zwei Schaltschwingen vorgesehen und mit der Wähl- und Schaltwelle drehfest verbunden, aber auf der Wähl- und Schaltwelle axial verschiebbar. An jeder Schaltschwinge ist ein erstes Sperrmitteln angeordnet, das mit der Sperrhülse und einem zweiten Sperrmittel zusammenwirkt, das fest im Schaltgetriebe angeordnet ist. In einer vorteilhaften Ausführungsform weist die Sperrhülse eine Innenverzahnung auf, die in einer Außenverzahnung der Wähl- und Schaltwelle axial bewegbar ist. In einer zweiten vorteilhaften Ausgestaltung weist die Sperrhülse axiale Innennuten auf, in die ein auf der Wähl- und Schaltwelle fixierter Stift eingreift. In einer Ausführungsform sind in dem ersten und zweiten Sperrmittel Öffnungen vorgesehen, in die eine Sperrscheibe der Sperrhülse eingreift. Eine Ausführung zeigt die Sperrscheibe in einer ovalen Form. Dadurch lässt sich in Richtung auf die Schaltkupplungen hin Platz einsparen gegenüber ein reinen kreisförmigen Scheibe. In einer Ausgestaltung sind die zweiten Formschlusselemente und die ersten Sperrmittel an den Schaltschwingen am gleichen Bauteil ausgebildet. Vorzugsweise sind die zweiten Sperrmittel fest im Getriebegehäuse ausgebildet. In einer anderen Ausgestaltung sind die zweiten Sperrmittel an mit dem Getriebegehäuse verbindbaren Deckeln angeordnet und von außerhalb des Getriebes zugänglich sind. Dabei lassen sich die Deckel am Getriebegehäuse in einem beschränkten Maß verschieben, wodurch eine Feinjustierung der zweiten Sperrmittel vorgenommen werden kann.

Die Erfindung wird anhand einer Zeichnung näher erläutert.

Es zeigen:
- Fig. 1: eine Darstellung der Schalteinrichtung von oben;
- Fig. 2: Schnitt durch verschiedene Schaltstellungen einer ersten Sperrhülse nach Fig. 1;
- Fig. 3: Schnitt durch verschiedene Schaltstellungen einer zweiten Sperrhülse nach Fig. 1;
- Fig. 4: eine Darstellung einer geänderten Schalteinrichtung nach Fig. 1 von oben;
- Fig. 5: Schnitt durch verschiedene Schaltstellungen einer ersten Sperrhülse nach Fig. 4;
- Fig. 6: Schnitt durch verschiedene Schaltstellungen einer zweiten Sperrhülse nach Fig. 4 und
- Fig. 7: Darstellung von Sperrmitteln.

Eine Schalteinrichtung 2 besitzt vier Schaltschwingen 4, 6, 8, 10, die in einem nicht näher dargestellten Getriebegehäuse um Schwenkachsen 12, 14, 16, 18 schwenkbar gelagert sind. Die Schaltschwingen 4, 6, 8, 10 sind gabelförmig gestaltet und weisen im Bereich ihrer gabelförmigen Enden Lagerbohrungen 20 auf, in denen nicht näher dargestellte Gleitsteine drehbar gelagert sind, die in Umfangsnuten von Schaltmuffen zugehöriger Schaltkupplungen gelagert sind. Die ebenfalls nicht näher dargestellten Schaltkupplungen rotieren um eine Drehachse 22. Quer zu den Schwenkachsen 12, 14, 16, 18 ist eine Wähl- und Schaltwelle 24 angeordnet, die im Getriebegehäuse um die Drehachse 22 in der Schwenkrichtung 26 schwenkbar und in Schaltrichtung 28 axial verschiebbar gelagert ist.

Auf der Wähl- und Schaltwelle 24 sind Schaltfinger 30, 32, 34, 36 befestigt und zueinander winkelversetzt angeordnet. Bei einer Schwenkbewegung der Wähl- und Schaltwelle 24 gelangen die Schaltfinger 30, 32, 34, 36 einzeln nacheinander in Eingriff mit gabelförmigen Klauen 38, 40, 42, 44, die an den Schaltschwingen 4, 6, 8, 10 befestigt sind. Die Schaltschwingen 4, 6, 8, 10 und die Schaltfinger 30, 32, 34, 36 sind jeweils einzelnen Gängen zugeordnet. So ist beispielsweise die Schaltschwinge 4 für den Rückwärtsgang, die Schaltschwinge 6 für den ersten und zweiten Gang, die Schaltschwinge 8 für den dritten und vierten Gang und die Schaltschwinge 10 für den fünften und sechsten Gang vorgesehen.

Die Schalteinrichtung 2 ist in einer neutralen Schaltposition dargestellt, wobei die Wähl- und Schaltwelle 24 so geschwenkt ist, dass hier beispielsweise die Schaltgasse des dritten und vierten Gangs gewählt ist, indem der Schaltfinger 34 in die Klaue 42 eingreift. Wird die Wähl- und Schaltwelle 24 in eine der beiden Schaltrichtungen 28 bewegt, wird der dritte oder vierte Gang geschaltet, indem über die Schaltschwinge 8 die entsprechende Schaltkupplung eingerückt wird. In der Schaltstellung kann die Wähl- und Schaltwelle 24 über Rastnuten 46 verrastet werden. Die Wähl- und Schaltwelle 24 wird mittels eines nicht näher dargestellten Gestänges geschwenkt und axial verschoben, das an einem Kugelelement 48 an der Wähl- und Schaltwelle 24 angreift.

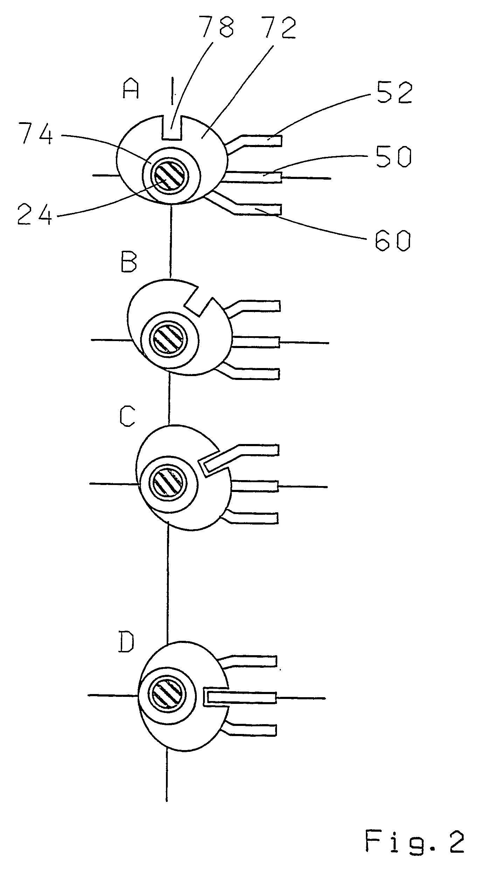

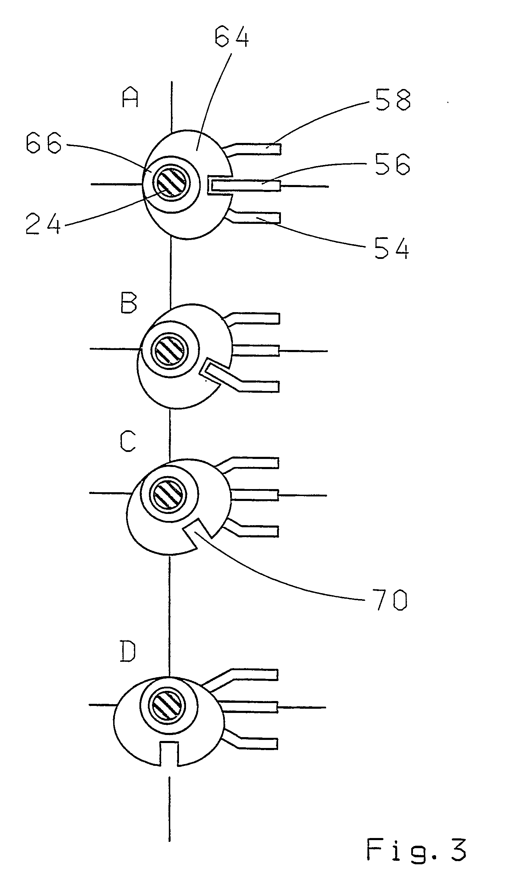

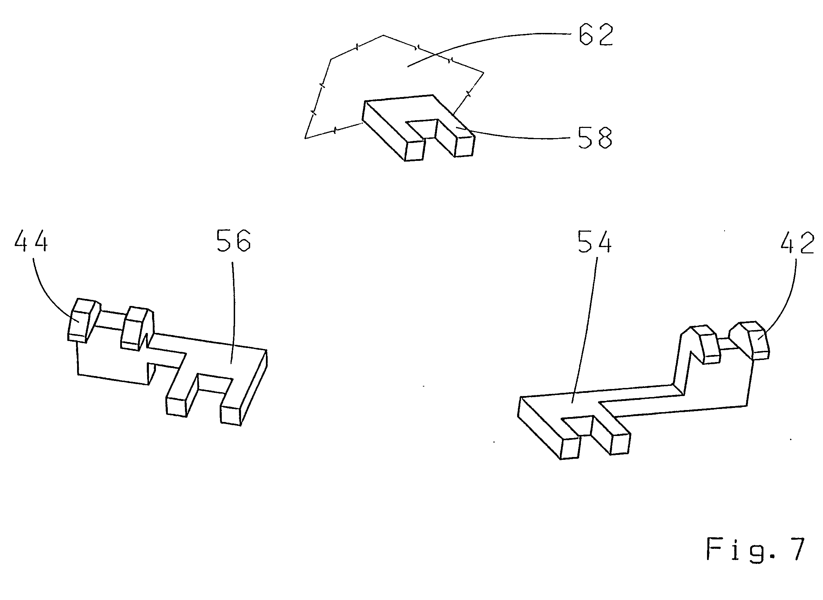

Damit während der Schaltung nur die angewählte Schaltschwinge 8 betätigt wird, müssen die übrigen Schaltschwingen 4, 6, und 10 verriegelt sein. Dazu sind an den Schaltschwingen 4, 6, 8, 10 je eine weitere Klaue 50, 52, 54, 56 als ein erstes Sperrmittel vorgesehen. In der Fig. 7 ist eine Klaue 56 und eine Klaue 54 dargestellt, die mit der Klaue 44 bzw. der Klaue 42 je ein einheitliches Bauteil bilden, das an den Schaltschwingen 8 bzw. 10 angeordnet ist. Die Öffnungen der Klauen 54 und 56 überdecken sich mit einer Öffnung einer weiteren Klaue 58, während sich die Öffnungen der Klauen 50 und 52 mit einer Öffnung einer Klaue 60 überdecken. Die Klauen 50, 52 und 60 bzw. 54, 56 und 58 liegen übereinander auf einem Teil eines Bogens um die Wähl- und Schaltwelle 24 herum. Die Klauen 58 und 60 sind fest im Getriebegehäuse 62 des angeordnet und bilden ein zweites Sperrmittel.
In die Öffnungen der Klauen 54, 56 und 58 greift eine Sperrscheibe 64 einer Sperrhülse 66 hinein. Sperrscheibe 64 und Sperrhülse 66 sind fest miteinander verbunden. Die Sperrhülse 66 ist auf einer Verzahnung 68 drehfest auf der Wähl- und Schaltwelle 24 angeordnet. Die Sperrhülse 66 ist jedoch axial in der Verzahnung 68 auf der Wähl- und Schaltwelle 24 verschiebbar bzw. die Wähl- und Schaltwelle 24 ist innerhalb der Sperrhülse 66 entlang der Achse 22 verschiebbar. In der Sperrscheibe 64 ist eine Öffnung 70 vorgesehen, die in der Fig. 3 zu sehen ist.
In die Öffnungen der Klauen 50, 52, und 60 greift eine Sperrscheibe 72 einer Sperrhülse 74 hinein. Sperrscheibe 72 und Sperrhülse 74 sind fest miteinander verbunden. Die Sperrhülse 74 ist auf einer Verzahnung 76 drehfest auf der Wähl- und Schaltwelle 24 angeordnet. Die Sperrhülse 74 ist jedoch axial in der Verzahnung 76 auf der Wähl- und Schaltwelle 24 verschiebbar bzw. die Wähl- und Schaltwelle 24 ist innerhalb der Sperrhülse 76 entlang der Achse 22 verschiebbar. In der Sperrscheibe 72 ist eine Öffnung 78 vorgesehen, die in der Fig. 2 zu sehen ist. Die Sperrscheiben 64 und 72 sind durch die Klauen 58 und 60 in axialer Richtung entlang der Drehachse 22 relativ zum Getriebegehäuse 62 fixiert.

Anhand der Fig. 2 und 3 soll ein Schaltvorgang beschrieben werden. Fig. 2C und Fig. 3C stellen die Wählposition der Wähl- und Schaltwelle 24 für die Schaltgasse 1/2 dar, in der üblicherweise der Gangschalthebel in Getriebeneutral liegt. Dabei ist in Fig. 2C die Sperrscheibe 72 dargestellt und in Fig. 3C die Sperrscheibe 64. In dieser Wählposition kann nun zum Schalten der Gänge 1 und 2 die Wähl- und Schaltwelle 24 entlang der Achse 22 in die Schaltrichtungen 28 bewegt werden, was in Fig. 2 und Fig. 3 einer Bewegung in die Zeichenebene hinein oder aus ihr heraus bedeutet. In der Fig. 2C überdeckt sich die Öffnung 78 mit der Klaue 52, so dass die Klaue 52 durch die Öffnung 78 hindurchgeführt werden kann und von der Sperrscheibe 72 in ihrer Bewegung nicht behindert wird. Die Sperrscheibe 72 selbst wird durch die Klaue 60 festgehalten und die Klaue 50 liegt nicht vor der Öffnung 78, so dass diese über die Sperrscheibe und die Klaue 60 ebenfalls gehäusefest fixiert ist. Diese Wählposition bedeutet für die Sperrscheibe 64 in der Fig. 3C, dass die Öffnung 70 sich mit keiner der dortigen Klauen 54, 56, 58 deckt, so dass alle diese Klauen 54, 56, 58 durch die Klaue 58 über die Sperrscheibe 64 gehäusefest fixiert sind.
Soll nun in die Schaltgasse für den dritten und vierten Gang gewechselt werden, so wird in der Neutralposition die Wähl- und Schaltwelle 24 in Schwenkrichtung 26 verschwenkt, was in der Fig. 2 und Fig. 3 einer Drehung nach links entspricht. Der Schaltfinger 32 verlässt dabei seine überdeckende Position mit der Klaue 40 und der Schaltfinger 34 geht in eine überdeckende Position mit der Klaue 42 an der Schaltschwinge 8. Durch eine Bewegung der Wähl- und Schaltwelle 24 in Schaltrichtung 28 lässt sich jetzt die Schaltschwinge 8 bewegen. Dies entspricht einer Verschwenkposition der Wähl- und Schaltwelle 24 wie sie aus der Fig. 2B und Fig. 3B zu ersehen ist. Die Klaue 54 an der Schaltschwinge 8 überdeckt sich in Fig. 3B mit der Öffnung 70 in der Sperrscheibe 64. Die anderen Klauen 56 und 58 in Fig. 3B sind durch die Sperrscheibe 64 blockiert. Ebenso sind in dieser Position nach Fig. 2B die Klauen 50, 52 und 56 durch die Sperrscheibe 72 blockiert.
Soll nun in die Schaltgasse für den fünften und sechsten Gang gewechselt werden, so wird in der Neutralposition die Wähl- und Schaltwelle 24 in Schwenkrichtung 26 verschwenkt, was in der Fig. 2 und Fig. 3 einer weiteren Drehung nach links entspricht. Der Schaltfinger 34 verlässt dabei seine überdeckende Position mit der Klaue 42 und der Schaltfinger 36 geht in eine überdeckende Position mit der Klaue 44 an der Schaltschwinge 10. Durch eine Bewegung der Wähl- und Schaltwelle 24 in Schaltrichtung 28 lässt sich jetzt die Schaltschwinge 10 bewegen. Dies entspricht einer Verschwenkposition der Wähl- und Schaltwelle 24 wie sie aus der Fig. 2A und Fig. 3A zu ersehen ist. Die Klaue 56 an der Schaltschwinge 10 überdeckt sich in Fig. 3A mit der Öffnung 70 in der Sperrscheibe 64. Die anderen Klauen 54 und 58 in Fig. 3A sind durch die Sperrscheibe 64 blockiert. Ebenso sind in dieser Position nach Fig. 2A die Klauen 50, 52 und 56 durch die Sperrscheibe 72 blockiert.
Soll nun schließlich in die Schaltgasse für den Rückwärtsgang gewechselt werden, so wird in der Neutralposition die Wähl- und Schaltwelle 24 in Schwenkrichtung 26 verschwenkt, was in der Fig. 2 und Fig. 3 einer Drehung nach rechts entspricht. Der Schaltfinger 36 verlässt dabei seine überdeckende Position mit der Klaue 44 und der Schaltfinger 30 geht in eine überdeckende Position mit der Klaue 38 an der Schaltschwinge 4. Durch eine Bewegung der Wähl- und Schaltwelle 24 in Schaltrichtung 28 lässt sich jetzt die Schaltschwinge 4 bewegen. Dies entspricht einer Verschwenkposition der Wähl- und Schaltwelle 24 wie sie aus der Fig. 2D und Fig. 3D zu ersehen ist. Die Klaue 50 an der Schaltschwinge 4 überdeckt sich in Fig. 2D mit der Öffnung 78 in der Sperrscheibe 72. Die anderen Klauen 52 und 60 in Fig. 2D sind durch die Sperrscheibe 78 blockiert. Ebenso sind in dieser Position nach Fig. 3D die Klauen 54, 56 und 58 durch die Sperrscheibe 64 blockiert.

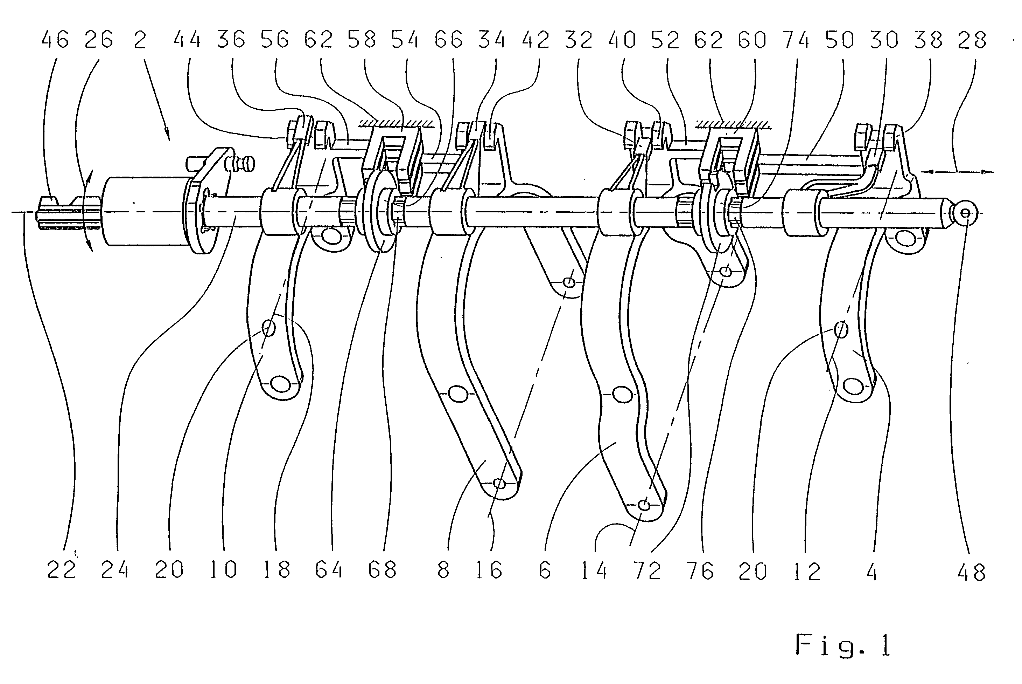

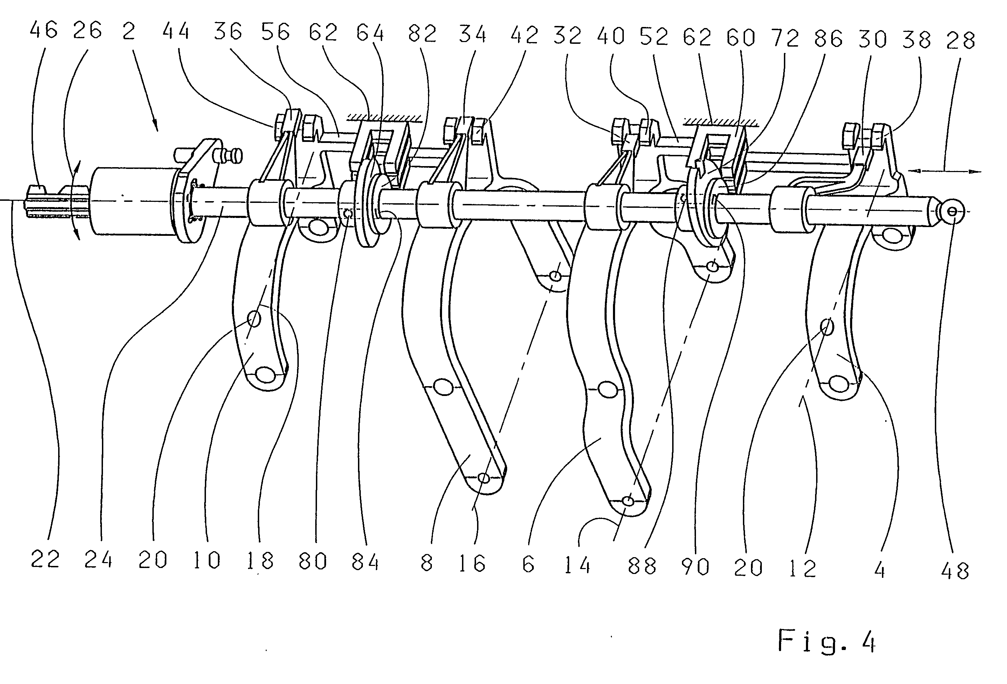

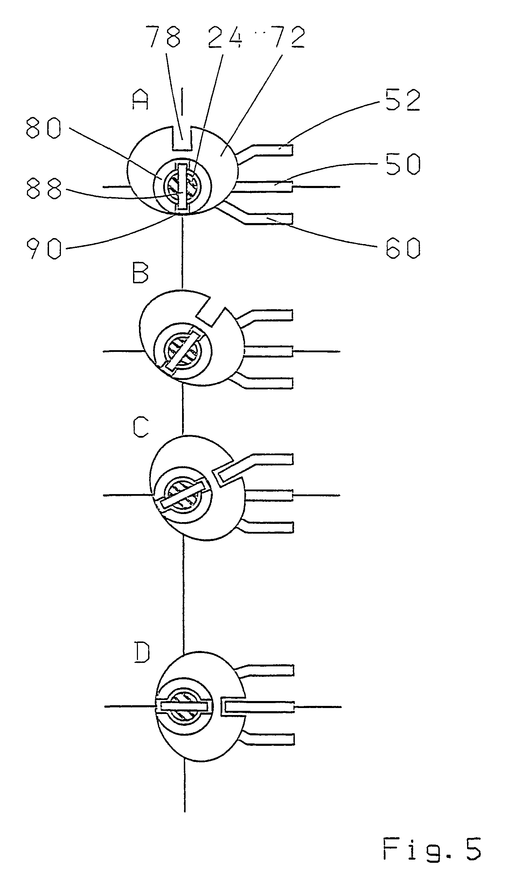

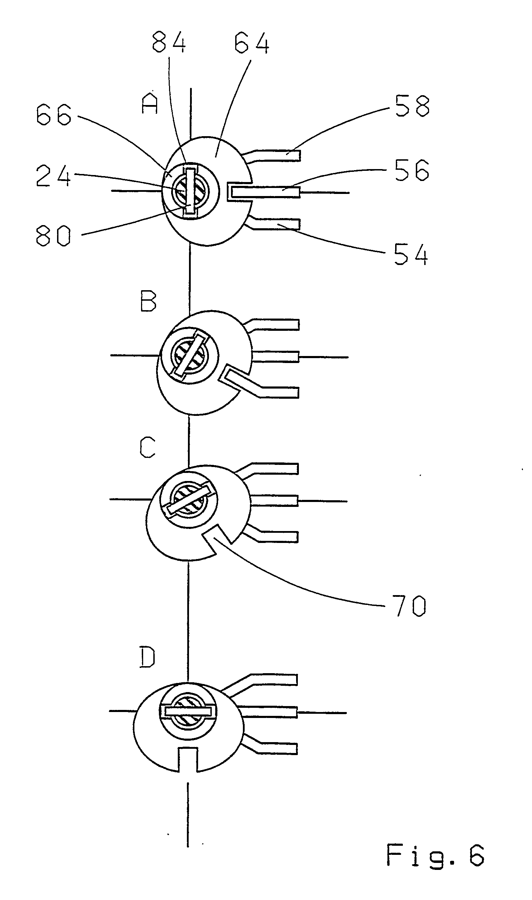

Die Fig. 4 zeigt eine geänderte Sperrhülse 82 gegenüber der Fig. 1. In Fig. 4 durchdringt ein Stift 80 die Wähl- und Schaltwelle 24 und ist in einer Nut 84 innerhalb der Sperrhülse 82 entlang der Achse 22 verschiebbar. Dadurch ist die Sperrhülse 82 drehfest mit der Wähl- und Schaltwelle 24 verbunden, während die Wähl- und Schaltwelle 24 innerhalb der Sperrhülse 82 axial verschoben werden kann. Entsprechend ist eine geänderte Sperrhülse 86 gegenüber der Fig. 1 vorgesehen. In Fig. 4 durchdringt ein Stift 88 die Wähl- und Schaltwelle 24 und ist in einer Nut 90 innerhalb der Sperrhülse 86 entlang der Achse 22 verschiebbar. Dies ist in einer Schnittdarstellung der Fig. 5 und der Fig. 6 zu entnehmen. Die Schaltvorgänge entsprechen den zu Fig. 2 und Fig. 3 beschriebenen Schaltvorgängen.

### Bezugszeichen

- 2: Schalteinrichtung
- 4: Schaltschwinge
- 6: Schaltschwinge
- 8: Schaltschwinge
- 10: Schaltschwinge
- 12: Schwenkachse
- 14: Schwenkachse
- 16: Schwenkachse
- 18: Schwenkachse
- 20: Lagerbohrungen
- 22: Drehachse
- 24: Wähl- und Schaltwelle
- 26: Schwenkrichtung
- 28: Schaltrichtung
- 30: Schaltfinger
- 32: Schaltfinger
- 34: Schaltfinger
- 36: Schaltfinger
- 38: Klaue
- 40: Klaue
- 42: Klaue
- 44: Klaue
- 46: Rastnut
- 48: Kugelelement
- 50: Klaue
- 52: Klaue
- 54: Klaue
- 56: Klaue
- 58: Klaue
- 60: Klaue
- 62: Getriebegehäuse
- 64: Sperrscheibe
- 66: Sperrhülse
- 68: Verzahnung
- 70: Öffnung
- 72: Sperrscheibe
- 74: Sperrhülse
- 76: Verzahnung
- 78: Öffnung
- 80: Stift
- 82: Sperrhülse
- 84: Nut
- 86: Sperrhülse
- 88: Stift
- 90: Nut

## Patentansprüche

1. Schalteinrichtung (2) eines mehrstufigen Schaltgetriebes, mit der mehrere axial hintereinander angeordnete Schaltkupplungen mit jeweils einer Schiebemuffe wechselweise über jeweils eine Schaltschwinge (4, 6, 8, 10) schaltbar sind, indem erste Formschlusselemente (30, 32, 34, 36) so auf einer schwenkbaren und axial verschiebbaren Wähl- und Schaltwelle (24) angeordnet sind, dass bei vorgegebenen Schwenkwinkeln der Wähl- und Schaltwelle (24) jeweils nur ein erstes Formschlusselement (30, 32, 34, 36) mit einem zweiten Formschlusselement (38, 40, 42, 44) zusammenwirkt, das an einer Schaltschwinge (4, 6, 8, 10) angeordnet ist, und indem durch ein axiales Verschieben der Wähl- und Schaltwelle (24) die zugehörige Schaltschwinge (4) betätigt wird, wobei die übrigen Schaltschwingen (6, 8, 10) während der Betätigung mittels einer Sperrvorrichtung in ihrer neutralen Position gesperrt sind, **dadurch gekennzeichnet, dass** die Sperrvorrichtung eine Sperrhülse (66, 74, 82, 86) umfasst, die auf der Wähl- und Schaltwelle (24) für je zwei Schaltschwingen (4, 6, 8, 10) vorgesehen ist und die mit der Wähl- und Schaltwelle (24) drehfest verbunden und auf der Wähl- und Schaltwelle (24) axial verschiebbar ist, und dass an jeder Schaltschwinge (4, 6, 8, 10) ein erstes Sperrmitteln (50, 52, 54, 56) angeordnet ist, das mit der Sperrhülse (66, 74, 82, 86) und einem zweiten Sperrmittel (58, 60) zusammenwirkt, das fest im Schaltgetriebe angeordnet ist.

2. Schalteinrichtung (2) nach Anspruch 1, **dadurch gekennzeichnet, dass** die Sperrhülse (66, 74, 82, 86) eine Innenverzahnung aufweist, die in einer Außenverzahnung (68, 76) der Wähl- und Schaltwelle (24) axial bewegbar ist.

3. Schalteinrichtung (2) nach Anspruch 1, **dadurch gekennzeichnet, dass** die Sperrhülse (66, 74, 82, 86) axiale Innennuten (84, 90) aufweist, in die ein auf der Wähl- und Schaltwelle (24) fixierter Stift (80, 88) eingreift.

4. Schalteinrichtung (2) nach einem der Ansprüche 1 bis 3, **dadurch gekennzeichnet, dass** die ersten (50, 52, 54, 56) und zweiten (58, 60) Sperrmittel Öffnungen aufweisen, in die eine Sperrscheibe (64, 72) der Sperrhülse (66, 74, 82, 86) eingreift.

5. Schalteinrichtung (2) nach Anspruch 4, **dadurch gekennzeichnet, dass** die Sperrscheibe (64, 72) eine ovale Form aufweist.

6. Schalteinrichtung (2) nach einem der Ansprüche 1 bis 5, **dadurch gekennzeichnet, dass** die an den Schaltschwingen (4, 6, 8, 10) angeordneten zweiten Formschlusselemente (38, 40, 42, 44) und die ersten Sperrmittel (50, 52, 54, 56) jeweils am gleichen Bauteil ausgebildet sind.

7. Schalteinrichtung (2) nach einem der Ansprüche 1 bis 6, **dadurch gekennzeichnet, dass** die zweiten Sperrmittel (58, 60) fest im Getriebegehäuse (62) ausgebildet sind.

8. Schalteinrichtung (2) nach einem der Ansprüche 1 bis 6, **dadurch gekennzeichnet, dass** die zweiten Sperrmittel (58, 60) an mit dem Getriebegehäuse (62) verbindbaren Deckeln angeordnet sind und von außerhalb des Getriebes zugänglich sind.

## Claims

1. The invention relates to a shifting device (2) of a multistep mechanical transmission, with which several axially tandem-arranged clutches, each featuring a sliding sleeve, are alternatingly shiftable via selector forks (4, 6, 8, 10) through arrangement of first positive-engagement elements (30, 32, 34, 36) on a swiveling and axially displaceable selector shaft (24) in such a way that for each specified swiveling angle of the selector shaft (24) only one first positive-engagement element (30, 32, 34, 36) acts together with a second positive-engagement element (38, 40, 42, 44), which is arranged on a selector fork (4, 6, 8, 10), and through actuation of the relevant selector fork (4) caused by axial displacement of the selector shaft (24), with the other selector forks (6, 8, 10) during this actuation being locked in their neutral positions by a locking device, **characterized in that** the locking device comprises a locking sleeve (66, 74, 82, 86), which is arranged on the selector shaft (24) for groups of two selector forks (4, 6, 8, 10); nonrotationally linked to the selector shaft (24) and axially displaceable on the selector shaft (24), and that on each selector fork (4, 6, 8, 10) a first locking means (50, 52, 54, 56) is arranged, which acts together with the locking sleeve (66, 74, 82, 86) and a second locking means (58, 60), which is arranged in a fixed place in the mechanical transmission.

2. A shifting device (2) according to claim 1, **characterized in that** the locking sleeve (66, 74, 82, 86) features internal teeth which are axially movable in the external teeth (68, 76) of the selector shaft (24).

3. A shifting device (2) according to claim 1, **characterized in that** the locking sleeve (66, 74, 82, 86) features axial internal grooves (84, 90) with which a pin (80, 88) fixed on the selector shaft (24) engages.

4. A shifting device (2) according to one of the claims 1 through 3, **characterized in that** the first (50, 52, 54, 56) and the second (58, 60) locking means feature openings with which a locking disk (64, 72) of the locking sleeve (66, 74, 82, 86) engages.

5. A shifting device (2) according to claim 4, **characterized in that** the locking disk (64, 72) has an oval shape.

6. A shifting device (2) according to one of the claims 1 through 5, **characterized in that** the second positive-engagement elements (38, 40, 42, 44) and the first locking means (50, 52, 54, 56) arranged on the shift forks (4, 5, 8, 10) are located on the same component.

7. A shifting device (2) according to one of the claims 1 through 6, **characterized in that** the second locking means (58, 60) are arranged in a fixed place in the transmission housing (62).

8. A shifting device (2) according to one of the claims 1 through 6, **characterized in that** the second locking means (58, 60) are arranged on covers connectable to the transmission housing (62) and accessible from outside the transmission.

## Revendications

1. Dispositif de changement de vitesses (2) d'une boîte de vitesses mécanique à plusieurs étages, permettant d'actionner alternativement plusieurs embrayages disposés axialement l'un après l'autre avec respectivement un coulisseau à chaque fois par l'intermédiaire d'une réglette (4, 6, 8, 10), en disposant des premiers éléments crabotés (30, 32, 34, 36) de telle manière sur un arbre de sélection et de commande (24) orientable et déplaçable axialement qu'en tenant compte d'angles d'orientation donnés de l'arbre de sélection et de commande (24) n'agissent ensemble à chaque fois qu'un premier élément craboté (30, 32, 34, 36) et un deuxième élément craboté (38, 40, 42, 44), disposé sur la réglette (4, 6, 8, 10), et en actionnant la réglette (4) correspondante par le déplacement axial de l'arbre de sélection et de commande (24), sachant que les autres réglettes (6, 8, 10) sont bloquées pendant l'actionnement dans leur position de repos par un dispositif de verrouillage, **caractérisé en ce que** le dispositif de verrouillage comprend une douille de blocage (66, 74, 82, 86) qui est prévue sur l'arbre de sélection et de commande (24) pour respectivement deux réglettes (4, 6, 8, 10) et qui est solidaire en rotation avec l'arbre de sélection et de commande (24) et qui est déplaçable axialement sur l'arbre de sélection et de commande (24), et **en ce que** sur chaque réglette (4, 6, 8, 10) est disposé un premier élément de blocage (50, 52, 54, 56) agissant avec la douille de blocage (66, 74, 82, 86) et un deuxième élément de blocage (58, 60), qui est disposé fixement dans la boîte de vitesses mécanique.

2. Dispositif de changement de vitesses (2) selon la revendication 1, **caractérisé en ce que** la douille de blocage (66, 74, 82, 86) comporte une denture intérieure qui peut être déplacée axialement dans une denture extérieure (68, 76) de l'arbre de sélection et de commande (24).

3. Dispositif de changement de vitesses (2) selon la revendication 1, **caractérisé en ce que** la douille de blocage (66, 74, 82, 86) comporte des rainures intérieures axiales (84, 90) dans lesquelles s'insère une goupille (80, 88) fixée sur l'arbre de sélection et de commande (24).

4. Dispositif de changement de vitesses (2) selon une des revendications 1 à 3, **caractérisé en ce que** les premiers éléments de blocage (50, 52, 54, 56) et les deuxièmes éléments de blocage (58, 60) comportent des ouvertures dans lesquelles s'insère une rondelle de verrouillage (64, 72) de la douille de blocage (66, 74, 82, 86).

5. Dispositif de changement de vitesses (2) selon la revendication 4, **caractérisé en ce que** la rondelle de verrouillage (64, 72) a une forme ovale.

6. Dispositif de changement de vitesses (2) selon une des revendications 1 à 5, **caractérisé en ce que** les deuxièmes éléments crabotés (38, 40, 42, 44) disposés sur les réglettes (4, 6, 8, 10) et les premiers éléments de blocage (50, 52, 54, 56) sont réalisés respectivement sur le même composant.

7. Dispositif de changement de vitesses (2) selon une des revendications 1 à 6, **caractérisé en ce que** les deuxièmes éléments de blocage (58, 60) sont réalisés de manière fixe dans le carter de la boîte de vitesses (62).

8. Dispositif de changement de vitesses (2) selon une des revendications 1 à 6, **caractérisé en ce que** les deuxièmes éléments de blocage (58, 60) sont disposés sur des couvercles qui peuvent être montés sur le carter de la boîte de vitesses (62) et qui sont accessibles par l'extérieur de la boîte de vitesses.
